# EUROPEAN PATENT SPECIFICATION

(11) **EP 3 352 347 B1**
(45) Date of publication and mention of the grant of the patent: **28.10.2020**
(21) Application number: 18150879.7
(22) Date of filing: 09.01.2018
(51) Int. Cl.: H02K 21/46, H02K 17/26, H02K 1/27

(54) **PERMANENT MAGNET (PM) BRUSHLESS MACHINE WITH OUTER ROTOR**
BÜRSTENLOSE PERMANENTMAGNET (PM)-MASCHINE MIT AUSSENLÄUFER
MACHINE SANS BALAI À AIMANT PERMANENT (PM) À ROTOR EXTERNE

(30) Priority: 19.01.2017 US 201715410291
(43) Date of publication of application: 25.07.2018
(73) Proprietor: Hamilton Sundstrand Corporation, Charlotte, NC 28217-4578 (US)
(72) Inventor: GIERAS, Jacek F., Glastonbury, CT 06033 (US)
(74) Representative: Dehns

(56) References cited:
- EP-A1- 3 057 208
- CN-Y- 2 404 739
- JP-A- S5 780 252

## Description

### BACKGROUND OF THE DISCLOSURE

The subject matter disclosed herein relates to permanent magnet (PM) brushless machines and, more particularly, to PM brushless machines with an outer rotor having certain dimensional features.

An electric motor is an electrical machine that converts electrical energy into mechanical energy. Generally, an electric motor that is configured as a PM brushless machine can include a rotor that rotates about its longitudinal axis, a stator that includes teeth about which conductive windings are wound and an air gap defined between the rotor and the stator. In normal motoring modes, most electric motors operate through the interaction between an electric motor's magnetic field and winding currents to generate force within the motor. That is, current applied to the conductive windings generates a magnetic flux that interacts with permanent magnets installed in the rotor to cause the rotor to rotate.

PM brushless machines are one type of electric motor and tend to have the highest power density, the highest efficiency and the best dynamic performance of all standard electric motors or machines. On the other hand, PM brushless machines are often expensive machines and produce cogging torque if the stator has slots for a winding. The cogging torque results from interactions of the rotor on the stator slot openings at a zero current state. CN 2404739Y, EP 3057208A1 and JP S5780252A all relate to PM brushless machines.

### BRIEF DESCRIPTION OF THE DISCLOSURE

An electric machine according to the invention is defined in claim 1. According to one aspect of the disclosure, an electric machine is provided and includes a stator that includes teeth, conductive windings configured to be wound about the teeth and a rotor rotatable about the stator. The rotor includes an annular core defining first slots along a circumferential dimension and two second slots along the circumferential dimension between neighboring first slots, permanent magnets disposable in the first slots and cage windings disposable in the second slots.

In accordance with additional or alternative embodiments, the rotor includes laminations of steel or soft magnetic composites and the cage windings include one or more of copper, aluminum and brass.

In accordance with the invention, pairs of second slots are defined along the circumferential dimension between pairs of neighboring first slots.

In accordance with the invention, a first distance between the permanent magnets and an outer diameter of the annular core is greater than a second distance between the permanent magnets and an inner diameter of the annular core and a third distance between the permanent magnets and a nearest one of the second slots is less than or equal to the second distance.

In accordance with additional or alternative embodiments, the second distance is about 0.5 to 2 mm, inclusively, and the third distance is less than or equal to 1.5 mm.

In accordance with additional or alternative embodiments, the electric machine further includes cage winding end rings.

In accordance with additional or alternative embodiments, the electric machine further includes cage winding end ring segments.

In accordance with additional or alternative embodiments, the first slots and the permanent magnets have at least one of inner and outer curvatures.

According to the invention, an electric machine is provided and includes a stator that includes teeth, conductive windings configured to be wound about the teeth and a rotor rotatable about the stator. The rotor includes an annular core defining first slots along a circumferential dimension and two second slots along the circumferential dimension between neighboring first slots, permanent magnets disposable in the first slots and cage windings disposable in the second slots. A first distance between the permanent magnets and an outer diameter of the annular core being greater than a second distance between the permanent magnets and an inner diameter of the annular core and a third distance between the permanent magnets and a nearest one of the second slots being less than or equal to the second distance.

In accordance with additional or alternative embodiments, the rotor includes laminations of steel or soft magnetic composites and the cage windings include one or more of copper, aluminum and brass.

In accordance with the invention, pairs of second slots are defined along the circumferential dimension between pairs of neighboring first slots.

In accordance with additional or alternative embodiments, the second distance is about 0.5 to 2 mm, inclusively, and the third distance is less than or equal to 1.5 mm.

In accordance with additional or alternative embodiments, the electric machine further includes cage winding end rings.

In accordance with additional or alternative embodiments, the electic machine further includes cage winding end ring segments.

According to the invention, an electric machine is provided and includes a stator that includes a hub and teeth extending radially outwardly from the hub, conductive windings wound about the teeth and a rotor. The rotor is disposed to rotate about an air gap defined about the stator. The rotor includes an annular core formed to define first slots along a circumferential dimension and two second slots along the circumferential dimension between neighboring first slots, permanent magnets disposed in the first slots and cage windings disposed in the second slots. A first distance between respective outer edges of the permanent magnets and an outer diameter of the annular core is greater than a second distance between respective inner edges of the permanent magnets and an inner diameter of the annular core and a third distance between respective lateral edges of the permanent magnets and a nearest one of the second slots is less than or equal to the second distance.

In accordance with additional or alternative embodiments, the rotor includes laminations of steel or soft magnetic composites and the cage windings include one or more of copper, aluminum and brass.

In accordance with the invention, pairs of second slots are defined along the circumferential dimension between pairs of neighboring first slots.

In accordance with additional or alternative embodiments, the second distance is about 0.5 to 2 mm, inclusively, and the third distance is less than or equal to 1.5 mm.

In accordance with additional or alternative embodiments, the electric machine further includes cage winding end rings.

In accordance with additional or alternative embodiments, the electric machine further includes cage winding end ring segments.

These and other advantages and features will become more apparent from the following description taken in conjunction with the drawings.

### BRIEF DESCRIPTION OF DRAWINGS

The subject matter, which is regarded as the disclosure, is particularly pointed out and distinctly claimed in the claims at the conclusion of the specification. The foregoing and other features, and advantages of the disclosure are apparent from the following detailed description taken in conjunction with the accompanying drawings in which:
FIG. 1 is an axial view of a stator and an outer rotor of an electric machine in accordance with embodiments;
FIG. 2 is an enlarged view of a portion of the stator of FIG. 1 and conductive elements;
FIG. 3 is a cross-sectional view of the stator and the outer rotor of FIG. 1 taken along line 3-3 of FIG. 1;
FIG. 4 is a schematic illustration of the relative distances between a central longitudinal axis of an electric machine and a cage winding and between the central longitudinal axis and a permanent magnet in accordance with embodiments;
FIG. 5 is an enlarged view of a portion of the stator and the outer rotor of FIG. 1 in accordance with further embodiments;
FIG. 6A is an axial view of an outer rotor of an electric machine with a cage winding end ring in accordance with embodiments;
FIG. 6B is a side view of the outer rotor of FIG. 5A; and
FIG. 7 is an axial view of an outer rotor of an electric machine with cage winding end ring segments in accordance with embodiments.

The detailed description explains embodiments of the disclosure, together with advantages and features, by way of example with reference to the drawings.

### DETAILED DESCRIPTION OF THE DISCLOSURE

As will be described below, a permanent magnet (PM) brushless machine is provided. The PM brushless machine is relatively cost effective, produces very low cogging torque and is relatively easy to manufacture. When it is operated as a motor, the PM brushless machine produces starting asynchronous torque.

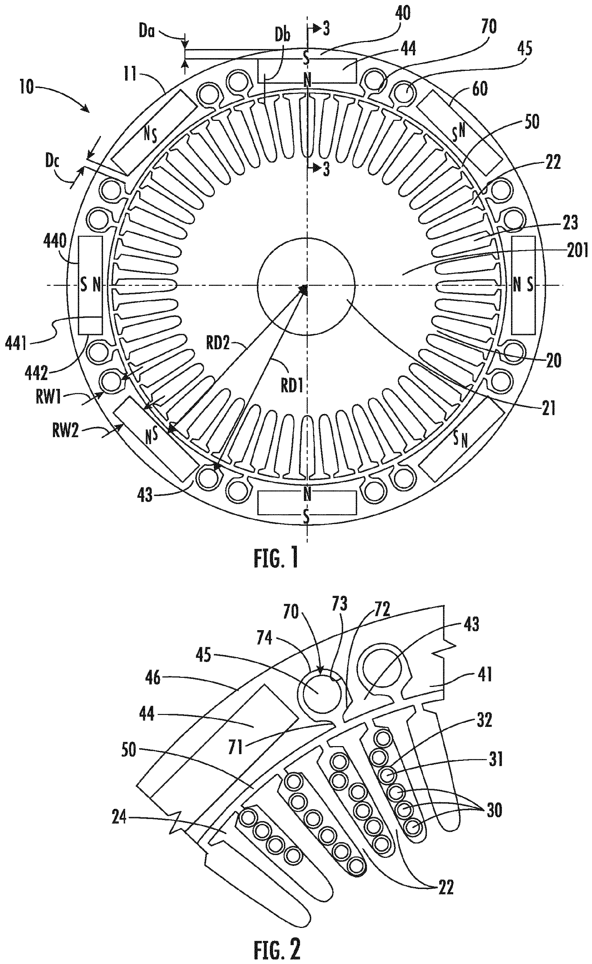

With reference to FIGS. 1-3, an electric machine 10 is provided and may be configured as a PM brushless machine 11. The electric machine 10 includes a stator 20, conductive windings 30 and a rotor 40. The stator 20 may be provided as an inner stator ferromagnetic core 201 and is rotationally fixed relative to a central longitudinal axis A and includes a central hub 21 and teeth 22. The teeth 22 extend radially outwardly from the central hub 21 and the inner stator ferromagnetic core 201 and each pair of adjacent teeth 22 cooperatively define slots 23.

As shown in FIG. 2, each tooth 22 has a substantially uniform thickness with increasing radial distance from the central hub 21 and a flared end 24. The conductive windings 30 are wound about the teeth 22 through the slots 23 and are constrained to remain in the slots 23 by the flared ends 24. Each of the conductive windings 30 includes a core 31 of electrically conductive material and an insulator 32 surrounding the conductive material and preventing short circuits between adjacent conductive windings 30. It is to be understood that the slots 23 may have different shapes than those described herein. In addition, the conductive windings can also be provided as slot-less conductive windings or as conductive windings with nonoverlapping coils.

The rotor 40 is disposed to rotate about the central longitudinal axis A and is separated from the stator 20 by an air gap 50, which is defined about an outermost diameter of the stator 20. That is, an inner diameter 41 (see FIG. 2) of the rotor 40 is separated from the outermost edges of the flared ends 24 of each of the teeth 22. As such, the rotor 40 provides substantial space for accommodation of embedded permanent magnets (to be discussed below). Thus, by effectively allowing for increased radial thicknesses of permanent magnets, a volume of permanent magnet material can be increased so that expensive neodymium iron boron (NdFeB) magnets can be replaced with relatively inexpensive or cheap ferrite magnets.

The conductive material of the cores 31 of the conductive windings 30 may be formed of an electrically conductive material, such as a metal or a metallic alloy. In accordance with embodiments, the electrically conductive material may be copper. In accordance with further embodiments, the electric machine 10 has a reduced amount and volume of such copper. In some cases, the reduction may approach 50%. This is at least partially achieved by arranging the stator 20 as an inner stator and the rotor 40 as an outer rotor and by shortening the end turns of the conductive windings 30, which are provided at opposite longitudinal ends of the electric machine 10. The shortened end turns result from the stator 20 providing a relatively short coil pitch.

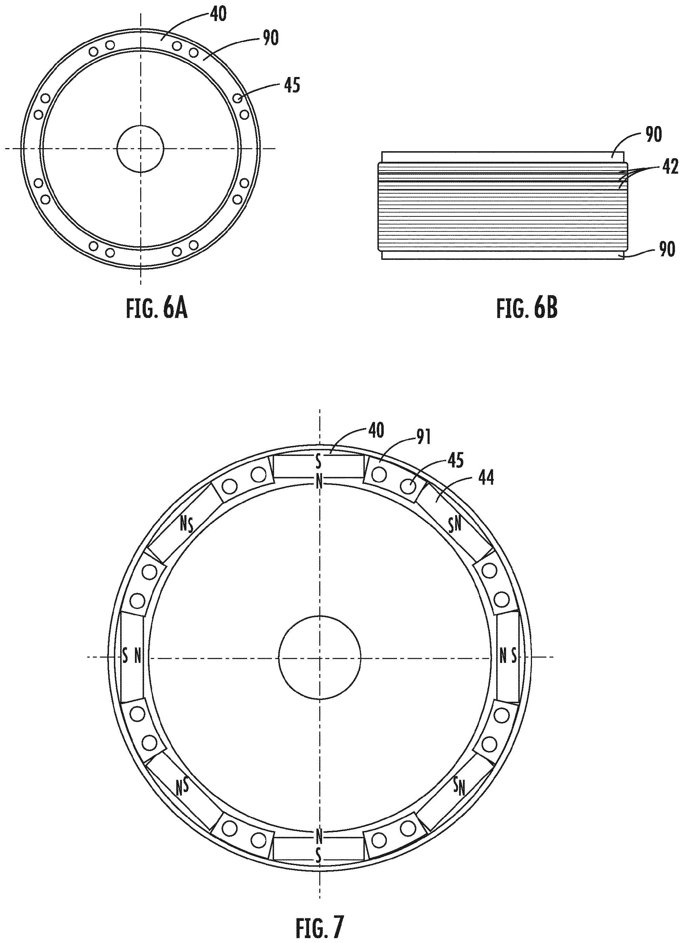

The rotor 40 may be formed of laminations 42 (see FIG. 6B) of steel, for example, or soft magnetic composites and includes an annular core 43, permanent magnets 44 and cage windings 45 (see FIGS. 1 and 2). The annular core 43 extends circumferentially about the stator 20 and the air gap 50 and is provided as a solid body with the inner diameter 41 and an outer diameter 46 (see FIG. 2) once the laminations 42 are laminated and cured together. The annular core 43 is formed to define first slots 60, which are arranged serially along the circumferential dimension, and one or more second slots 70. The one or more second slots 70 are arranged along the circumferential dimension between neighboring first slots 60. The permanent magnets 44 may be provided as permanent magnet bars are disposed by insertion in the first slots 60. The cage windings 45 may be formed of conductive and materials that are respectively similar to or different from those of the conductive windings 30. In any case, the cage windings 45 are disposed as windings in and through the second slots 70 with end turns provided at the opposite longitudinal ends of the electric machine 10.

As shown in FIG. 2, each second slot 70 is formed to include a relatively narrow neck portion 71 which leads to a tapered neck portion 72, a slot portion 73 and a curved end portion 74 with increasing radial distance from the central longitudinal axis A. The cage windings 45 may be formed of electrically conductive materials, such as copper (Cu), aluminum (Al) and brass.

In accordance with embodiments, at least a pair of second slots 70 may be defined between each neighboring pair of first slots 60. Thus, for the case of the annular core 43 being formed to define eight first slots 60, as shown in FIG. 1, the annular core 43 will also be formed to define sixteen second slots 70 and the rotor 40 will include eight instances where the permanent magnets 44 are disposed in the first slots 60 and sixteen instances where the cage windings 45 are disposed in the second slots 70.

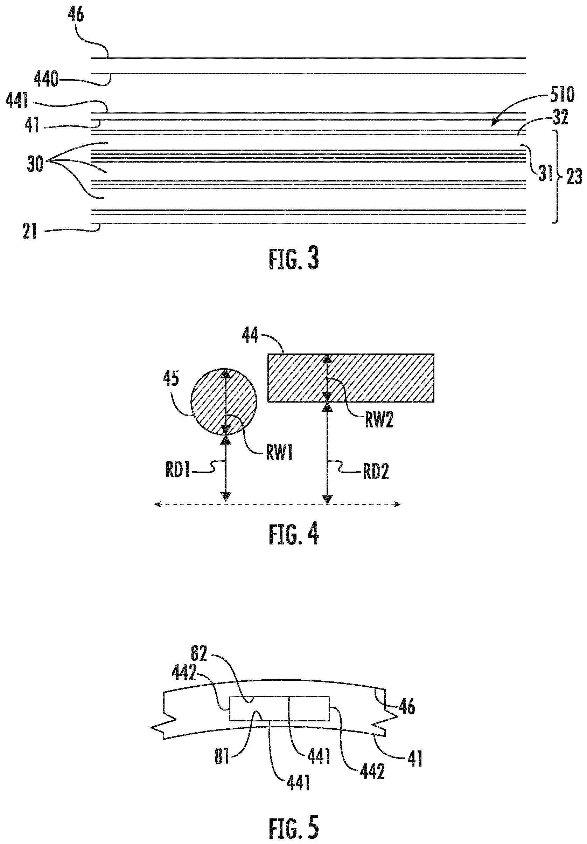

In accordance with further embodiments and with continued reference to FIG. 1 and additional reference to FIG. 4, each instance of a cage winding 45 in a corresponding second slot 70 is disposed at a first radial distance RD1 from the central longitudinal axis A and has a first radial width RW1. Meanwhile, each instance of a permanent magnet 44 in a corresponding first slot 60 is disposed at a second radial distance RD2 from the central longitudinal axis A and has a second radial width RW2. The first and second slots 60 and 70 are provided such that the permanent magnets 44 and the cage windings 45 are radially (but not circumferentially) overlapped. That is, at least some portion of each cage winding 45 is located at a same radial distance (but at a different circumferential location) from the central longitudinal axis A as at least some portion of one or more of the permanent magnets 44.

In operation, an electric current is applied to the conductive windings 30 to generate a magnetic flux in accordance with the number of turns of the conductive windings and the magnitude and voltage of the electric current. This magnetic flux interacts with the permanent magnets 44 and drives rotations of the rotor 40 about the central longitudinal axis A. During start-up procedures, since the electric machine 10 is not self-starting, current is induced in the cage windings 45 in order to generate an asynchronous torque which drives rotations of the rotor 40 until the rotor gets up to synchronous speed.

The permanent magnets 44 define poles of the electric machine 10 and are provided with alternating north and south polarities that are aligned with the radial dimension of the electric machine 10. That is, the permanent magnet 44 at the top of the image in FIG. 1 has an interior north polarity and an exterior south polarity and the adjacent permanent magnets 44 each have an interior south polarity and an exterior north polarity. It is to be understood that while the electric machine 10 of FIG. 1 has eight poles, the number of poles of the electric machine 10 can be increased or decreased based on the operating frequency of the electric machine 10, the desired rotational speed of the rotor 40 and other considerations (e.g., manufacturing costs and durability).

In accordance with embodiments, a first distance Da is defined between respective outer edges 440 of the permanent magnets 44 and the outer diameter 46 and is greater than a second distance Db, which is defined between respective inner edges 441 of the permanent magnets 44 and the inner diameter 41. In addition, a third distance Dc is defined between respective lateral edges 442 of the permanent magnets 44 and a nearest one of the second slots 70 and is less than or equal to the second distance Db. With such dimensions, the portions of the rotor 40 between first slots 60 and second neighboring slot 70 are highly saturated which minimizes the leakage flux between permanent magnets of different polarity and prevents deterioration of overall machine performance. In accordance with further embodiments, the second distance Db may be about 0.5 mm to about 2 mm, inclusively, and the third distance Dc may be less than or equal to about 1.5 mm.

With reference to FIG. 5, at least one of the first slots 60 and the outer and inner edges 440 and 441 of the corresponding permanent magnet 44 may have at least one of a curved inner surface 81 and a curved outer surface 82. In such cases, a curvature of the curved inner surface 81 may be similar to the curvature of the inner diameter 41 and a curvature of the outer curved surface 82 may be similar to the curvature of the outer diameter 46. It is to be understood that additional shape variations may be provided as well. These would include, but are not limited to, the respective lateral edges 442 of the permanent magnets 44 being tapered outwardly (not specifically shown) with increasing radial distance from the central longitudinal axis A and the cage windings 45 being sized to loosely or tightly fit within the corresponding second slots 70 (not specifically shown).

In accordance with further embodiments and, with reference to FIGS. 6A and 6B and to FIG. 7, the electric machine 10 may further include continuous or 360° cage winding end rings 90 to support the end turns of the cage windings 45 (see FIGS. 6A and 6B) or cage winding end ring segments 91 (see FIG. 7).

With the various configurations described above, the electric machine 10 provides for a relative reduction of copper for armature or conductive windings 30 of up to 50%, an application of the cage windings 45 that naturally minimizes the leakage flux between neighboring permanent magnets 44, a substantial reduction of cogging torque by application of wide pole shoes (i.e., the first slots 60) for the permanent magnets 44, an option for replacement of rare-earth magnets with inexpensive or cheap ferrite magnets, a lower volume envelope as compared to standard PM brushless machines and stable operation as a generator due to the cage windings 45 being capable of damping oscillations due to variable loads. Overall, the electric machine 10 is relatively lightweight and of simple construction and thus may be usable in aerospace applications, for example, such as actuators, fans, air conditioning systems, nitrogen production systems, ram air turbine generators, etc. In addition, due to the high moment of inertia of the rotor 40, the electric machine 10 can be also used as integrated starter generator in land vehicles or electrical machines for flywheel energy storage systems.

While the disclosure is provided in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the scope defined by the appended claims. Additionally, while various embodiments of the disclosure have been described, it is to be understood that the exemplary embodiment(s) may include only some of the described exemplary aspects. Accordingly, the disclosure is not to be seen as limited by the foregoing description, but is only limited by the scope of the appended claims.

## Claims

1. An electric machine (10), comprising:
a stator (20) comprising teeth (22);
conductive windings (30) configured to be wound about the teeth (22); and
a rotor (40) rotatable around the stator (20),
the rotor (40) comprising an annular core (43) defining first slots (60) along a circumferential dimension and two and only two second slots (70) along the circumferential dimension between neighboring first slots (60), permanent magnets (44) disposable in the first slots (60) with north and south poles respectively oriented along a radial dimension and cage windings (45) disposable in each of the two and only two second slots (70);
wherein each of the two and only two second slots (70) are defined along the circumferential dimension between pairs of neighboring first slots (60) to respectively accommodate a single one of the cage windings (45) and to respectively comprise with increasing radial distance from a central longitudinal axis:
a narrow neck portion (71) open to a gap between the stator and the rotor;
a tapered neck portion (72);
a slot portion (73); and
a curved end portion (74),
**characterized in that** a first distance (Da) between the radially outer edge (440) of each of the permanent magnets (44) and an outer diameter of the annular core (43) is greater than a second distance (Db) between the radially inner edge (441) of each of the permanent magnets (44) and an inner diameter of the annular core (43), and
a third distance (Dc) between the lateral edges (442) of each of the permanent magnets (44) and a nearest one of the two and only two second slots (45) is less than or equal to the second distance (Db).

2. The electric machine according to claim 1, wherein:
the rotor comprises laminations of steel or soft magnetic composites, and
the cage windings comprise one or more of copper, aluminum and brass.

3. The electric machine according to claims 1 or 2, wherein the second distance is about 0.5 to 2 mm, inclusively.

4. The electric machine according to claim 3,wherein the third distance is less than or equal to 1.5 mm.

5. The electric machine according to claim 1, further comprising continuous cage winding end rings to interconnect the cage windings.

6. The electric machine according to claim 1, further comprising cage winding end ring segments.

7. The electric machine according to claim 1, wherein the first slots and the permanent magnets have at least one of inner and outer curvatures.

## Patentansprüche

1. Elektrische Maschine (10), Folgendes umfassend:
einen Stator (20), der Zähne (22) umfasst;
leitende Wicklungen (30), die dazu konfiguriert sind, um die Zähne (22) gewickelt zu werden; und
einen Rotor (40), der um den Stator (20) rotierbar ist,
wobei der Rotor (40) einen Ringkern (43), der erste Schlitze (60) entlang einer Umfangsdimension und genau zwei zweite Schlitze (70) entlang der Umfangsdimension zwischen benachbarten ersten Schlitzen (60) definiert, Permanentmagneten (44), die in den ersten Schlitzen (60) anbringbar sind, wobei die Nord- und Südpole jeweils entlang einer radialen Dimension ausgerichtet sind, und Kurzschlusswicklungen (45) umfasst, die in jedem der genau zwei zweiten Schlitze (70) anbringbar sind;
wobei jeder von den genau zwei zweiten Schlitzen (70) entlang der Umfangsdimension zwischen Paaren benachbarter erster Schlitze (60) definiert ist, um jeweils eine einzige der Kurzschlusswicklungen (45) zu beherbergen und um mit zunehmender radialer Distanz von einer zentralen Längsachse jeweils Folgendes zu umfassen:
einen engen Halsabschnitt (71), der zu einer Lücke zwischen dem Stator und dem Rotor hin offen ist;
einen sich verjüngenden Halsabschnitt (72);
einen Schlitzabschnitt (73); und
einen gebogenen Endabschnitt (74),
**dadurch gekennzeichnet, dass** eine erste Distanz (Da) zwischen der radial äußeren Kante (440) von jedem der Permanentmagneten (44) und einem Außendurchmesser des Ringkerns (43) größer ist als eine zweite Distanz (Db) zwischen der radial inneren Kante (441) von jedem der Permanentmagneten (44) und einem Innendurchmesser des Ringkerns (43) und
eine dritte Distanz (Dc) zwischen den lateralen Kanten (442) von jedem der Permanentmagneten (44) und einem nächsten von den genau zwei zweiten Schlitzen (45) kleiner oder gleich der zweiten Distanz (Db) ist.

2. Elektrische Maschine nach Anspruch 1, wobei:
der Rotor Lamellen aus Stahl oder weichmagnetischen Verbundwerkstoffen umfasst und
die Kurzschlusswicklungen eines oder mehrere von Kupfer, Aluminium und Messing umfassen.

3. Elektrische Maschine nach Anspruch 1 oder 2, wobei die zweite Distanz ungefähr 0,5 bis einschließlich 2 mm beträgt.

4. Elektrische Maschine nach Anspruch 3, wobei die dritte Distanz kleiner oder gleich 1,5 mm ist.

5. Elektrische Maschine nach Anspruch 1, ferner kontinuierliche Kurzschlusswicklungsendringe umfassend, um die Kurschlusswicklungen zu verbinden.

6. Elektrische Maschine nach Anspruch 1, ferner Kurzschlusswicklungsendringabschnitte umfassend.

7. Elektrische Maschine nach Anspruch 1, wobei die ersten Schlitze und die Permanentmagneten mindestens eine von einer Innen- und einer Außenkrümmung aufweisen.

## Revendications

1. Machine électrique (10), comprenant :
un stator (20) comprenant des dents (22) ;
des enroulements conducteurs (30) conçus pour être enroulés autour des dents (22) ; et
un rotor (40) pouvant tourner autour du stator (20) ;
le rotor (40) comprenant un noyau annulaire (43) définissant des premières fentes (60) le long d'une dimension circonférentielle et deux et seulement deux secondes fentes (70) le long de la dimension circonférentielle entre des premières fentes voisines (60), des aimants permanents (44) jetables dans les premières fentes (60) avec des pôles nord et sud respectivement orientés selon une dimension radiale et des enroulements de cage (45) jetables dans chacune des deux et seulement deux secondes fentes (70) ;
dans laquelle chacune des deux et seulement deux secondes fentes (70) est définie le long de la dimension circonférentielle entre des paires de premières fentes voisines (60) pour loger respectivement un seul des enroulements de cage (45) et pour comprendre respectivement une distance radiale croissante d'un axe longitudinal central :
une partie de col étroit (71) ouverte sur un espace entre le stator et le rotor ;
une partie de col effilé (72) ;
une partie de fente (73) ; et
une partie d'extrémité courbe (74),
**caractérisée en ce qu'**une première distance (Da) entre le bord radialement extérieur (440) de chacun des aimants permanents (44) et un diamètre extérieur du noyau annulaire (43) est supérieure à une deuxième distance (Db) entre le bord radialement intérieur (441) de chacun des aimants permanents (44) et un diamètre intérieur du noyau annulaire (43), et
une troisième distance (Dc) entre les bords latéraux (442) de chacun des aimants permanents (44), et l'une plus proche des deux et seulement deux secondes fentes (45) est inférieure ou égale à la deuxième distance (Db).

2. Machine électrique selon la revendication 1, dans laquelle :
le rotor comprend des tôles feuilletées d'acier ou des composites magnétiques doux, et
les enroulements de cage comprennent un ou plusieurs éléments parmi le cuivre, l'aluminium et le laiton.

3. Machine électrique selon la revendication 1 ou 2, dans laquelle la deuxième distance est comprise entre 0,5 et 2 mm, inclusivement.

4. Machine électrique selon la revendication 3, dans laquelle la troisième distance est inférieure ou égale à 1,5 mm.

5. Machine électrique selon la revendication 1, comprenant en outre des bagues d'extrémité d'enroulement de cage continu pour relier les enroulements de cage.

6. Machine électrique selon la revendication 1, comprenant en outre des segments de bague d'extrémité d'enroulement de cage.

7. Machine électrique selon la revendication 1, dans laquelle les premières fentes et les aimants permanents ont au moins l'une parmi des courbures intérieure et extérieure.
